# FASCICULE DE BREVET EUROPEEN

(11) **EP 4 037 919 B1**
(45) Date de publication et mention de la délivrance du brevet: **07.05.2025**
(21) Numéro de dépôt: 20792702.1
(22) Date de dépôt: 29.09.2020
(51) Int. Cl.: B60C 1/00, C08K 5/375, C08L 9/06

(54) **COMPOSITION DE CAOUTCHOUC POUR PNEUMATIQUE DE GRANDE DIMENSION**
GUMMIZUSAMMENSETZUNG FÜR EINEN GROSSREIFEN
RUBBER COMPOSITION FOR A LARGE-SIZED TIRE

(30) Priorité: 30.09.2019 FR 1910790
(43) Date de publication de la demande: 10.08.2022
(73) Titulaire: COMPAGNIE GENERALE DES ETABLISSEMENTS MICHELIN, 63040 Clermont-Ferrand (FR)
(72) Inventeur: CABIOCH, Jean-Luc, 63040 CLERMONT-FERRAND CEDEX 9 (FR); MONOD, Anthony, 63040 CLERMONT-FERRAND CEDEX 9 (FR)
(74) Mandataire: M.F.P. Michelin
(86) Numéro de dépôt international: PCT/FR2020/051699
(87) Numéro de publication internationale: WO 2021/064317

(56) Documents cités:
- EP-A1- 0 994 150
- EP-A1- 1 000 960
- WO-A1-2018/104671

## Description

La présente invention est relative à des pneumatiques de grande dimension, en particulier des pneumatiques pour véhicule de génie civil ou pour véhicule agricole.

Un bandage de pneumatique est obtenu par empilage de différentes nappes à base de caoutchouc et différents composants sur un tambour rotatif suivi d'une conformation en une forme toroïdale de l'ensemble. Les nappes successivement appliquées sur le tambour pour obtenir un bandage de pneumatique sont généralement : une nappe de caoutchouc butyle qui forme la gomme interne étanche au gaz de gonflage, une nappe carcasse à base de fils de renforts noyés dans la gomme qui assure la tenue mécanique du pneumatique, suivie de l'agencement des tringles, éventuellement des profilés de bourrage tringles, ensuite des flancs, de la ceinture de renfort et de la bande de roulement. Une fois conformé en forme de tore, le bandage cru (c'est-à-dire non réticulé) est placé à l'intérieur d'un moule de cuisson dont la cavité interne présente la forme et les dimensions du pneumatique fini. Une fois dans le moule les parois externes du bandage sont plaquées contre les parois internes métalliques du moule de cuisson au moyen d'une membrane de cuisson qui est, elle, expansible sous l'effet d'un fluide caloporteur sous pression. Le dessin de la bande de roulement des garnitures du moule et celui des coquilles s'imprime alors sur le bandage cru qui est ensuite réticulé à l'aide de la chaleur. Cette étape permet notamment de fixer la sculpture de la bande de roulement.

La « sculpture » d'une bande de roulement est un système plus ou moins complexe d'éléments en relief séparés les uns des autres par des découpures. Les éléments en relief d'une sculpture peuvent être soit des nervures soit des blocs.

Une « nervure » (« rib » en anglais), est un élément en relief formé sur une bande de roulement et s'étend essentiellement selon la direction circonférentielle, cet élément étant délimité soit par deux découpures, soit par une découpure et un bord de la bande de roulement. Une nervure comprend deux parois latérales et une face de contact, cette dernière étant destinée à venir en contact avec la chaussée pendant le roulage. Cet élément s'étend dans la direction circonférentielle et fait le tour du pneumatique.

Un « bloc » (« tread block » en anglais), est un élément en relief formé sur une bande de roulement, cet élément étant délimité par une ou plusieurs découpures rectilignes, incurvées ou circulaire, et éventuellement par un bord de la bande de roulement. Un bloc comprenant également une face de contact, cette dernière étant destinée à venir en contact avec la chaussée pendant le roulage.

Les découpures (« cut out » en anglais) peuvent être soit des rainures, soit des incisions selon leur largeur, c'est-à-dire la distance entre les parois de matière qui les délimitent et leur fonctionnement lors du roulage. La largeur d'une rainure est typiquement au moins égale à 2 mm, alors que la largeur d'une incision est typiquement au plus égale à 2 mm. Lors du roulage du pneumatique, les parois de matière d'une rainure n'entrent pas en contact l'une avec l'autre, alors que les parois de matière d'une incision entrent en contact au moins en partie l'une avec l'autre.

Lors de la conformation du pneumatique dans un moule de cuisson (lorsque la membrane de cuisson plaque les parois externes du bandage contre les parois internes du moule), les garnitures du moule s'enfoncent dans la bande de roulement, impliquant un déplacement de la composition qui la compose. Ce déplacement de matière peut affecter l'architecture globale du pneumatique. Cela est particulièrement vrai pour les pneumatiques de grande dimension, dont la bande de roulement présente des rainures relativement profondes, bien plus que celles présentes sur des pneumatiques de plus faible dimension tels que les pneumatiques de véhicules de tourisme, deux roues, camion, etc.

En effet, les pneumatiques de grande dimension présentent une hauteur moyenne de bloc supérieurs à 20 mm, généralement comprise entre 65 et 120 mm, et/ou présentent un taux moyen de creux volumique sur l'ensemble de la bande de roulement supérieur à 10%, généralement compris entre 10 et 50% pour les pneumatiques pour véhicules de génie civil, et entre 50 et 78% pour les pneumatiques pour véhicules agricoles.

Par ailleurs, il peut être noté que dans le cas des pneumatiques de grande dimension, pour véhicules de génie civil notamment, les découpures désignent des rainures dont la largeur est supérieure à 10 mm, voire supérieure à 20, 30, 40 ou 50 mm, en général entre 10 et 60 mm.

Les bandes de roulement de pneumatique pour véhicule agricole comprennent, quant à elles, généralement une pluralité de barrettes, et ne comprennent généralement pas de nervure. Les barrettes sont des éléments en relief par rapport à une surface de fond qui est une surface de révolution autour de l'axe de rotation du pneumatique. Une barrette a généralement une forme globalement parallélépipédique allongée, constituée d'au moins une portion rectiligne ou curviligne, et est séparée des barrettes adjacentes par des creux de grandes dimensions. Une barrette peut être constituée d'une succession de portions rectilignes, telle que décrite dans les documents US3603370, US4383567, EP795427 ou avoir une forme curviligne, telle que présentée dans les documents US4446902, EP903249, EP1831034. La distance entre deux barrettes consécutives est souvent très supérieure à la distance entre deux blocs de bande de roulement pour véhicule de génie civil. Elle peut être supérieure à 10 cm, parfois de l'ordre de 25 cm.

Du fait de la morphologie de leur bande de roulement, les pneumatiques de grande dimension, qu'ils soient destinés à équiper des véhicules de génie civil, agricoles ou autre, sont particulièrement impactés par les mouvements de matière des différentes nappes qui composent le pneumatique lors de sa conformation dans le moule de cuisson. Dans ces cas de figure, l'architecture du pneumatique avant et après cuisson peut évoluer.

Pour obtenir une architecture déterminée dans un pneumatique cuit (après réticulation), les concepteurs de pneumatiques anticipent les mouvements de matière liés à la conformation du pneumatique dans le moule de cuisson, et ajustent l'architecture du bandage cru en conséquent. Dans le cas des pneumatiques de grande dimension, ce travail d'anticipation est plus compliqué dans la mesure où plus de matière est déplacée.

Il serait donc utile pour les concepteurs de pneumatiques de disposer de moyens permettant de mieux contrôler le déplacement de matière lors de la conformation de pneumatique dans le moule de cuisson. Avantageusement, ces moyens ne doivent pas impacter les propriétés du matériau avant et après cuisson. A la connaissance de la Demanderesse, aucune solution n'est proposée pour résoudre ce problème.

Poursuivant ses recherches, la Demanderesse a découvert que l'utilisation de polysulfure organique dans une composition de pneumatique de grande dimension permet de limiter le déplacement des compositions des différentes nappes qui composent le pneumatique et donc de réduire l'impact de la conformation du pneumatique sur son architecture finale après cuisson.

La Demanderesse a constaté que cette solution n'affecte pas la viscosité de la composition avant cuisson et ne présente donc pas d'impact négatif sur la processabilité. Elle a en outre constaté que cette solution n'affecte pas négativement, les propriétés à cuit du pneumatique obtenu après cuisson, notamment la rigidité et l'hystérèse.

Ainsi l'invention a pour objet un pneumatique pourvu d'une bande de roulement **tel que défini à la revendication 1.**

### I- DÉFINITIONS

Dans la présente, les directions circonférentielle, axiale et radiale désignent respectivement une direction tangente à la surface de roulement du pneumatique et orientée selon le sens de rotation du pneumatique, une direction parallèle à l'axe de rotation du pneumatique et une direction perpendiculaire à l'axe de rotation du pneumatique. Par « radialement intérieur, respectivement radialement extérieur », on entend « plus proche, respectivement plus éloigné de l'axe de rotation du pneumatique ». Par « axialement intérieur, respectivement axialement extérieur », on entend « plus proche, respectivement plus éloigné du plan équatorial du pneumatique », le plan équatorial du pneumatique étant le plan passant par le milieu de la surface de roulement du pneumatique et perpendiculaire à l'axe de rotation du pneumatique.

Par l'expression « composition à base de », il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression « partie en poids pour cent parties en poids d'élastomère » (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b). Dans la présente, lorsqu'on désigne un intervalle de valeurs par l'expression « de a à b », on désigne également et préférentiellement l'intervalle représenté par l'expression « entre a et b ».

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Toutes les valeurs de température de transition vitreuse « Tg » décrite dans la présente sont mesurées de manière connue par DSC (Differential Scanning Calorimetry) selon la norme ASTM D3418 (1999).

### II- DESCRIPTION DE L'INVENTION

### II-1 Matrice élastomérique

La composition du pneumatique selon l'invention peut contenir un seul élastomère diénique ou un mélange de plusieurs élastomères diéniques.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Avantageusement, l'élastomère diénique est un élastomère diénique essentiellement insaturé.

On entend particulièrement par élastomère diénique susceptible d'être utilisé dans le cadre de la présente invention :
a) tout homopolymère d'un monomère diène, conjugué ou non, ayant de 4 à 18 atomes de carbone,
b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

A titre de diènes conjugués conviennent les diènes conjugués ayant de 4 à 12 atomes de carbone, en particulier les 1,3-diènes, tels que notamment le 1,3-butadiène et l'isoprène. A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta-, para-méthylstyrène, le mélange commercial "vinyle-toluène", le para-tertiobutylstyrène.

A titre d'α-monooléfines aliphatiques conviennent notamment les α-monooléfines aliphatiques acycliques ayant de 3 à 18 atomes de carbone.

Préférentiellement, l'élastomère diénique est choisi dans le groupe constitué par les polybutadiènes (BR), les polyisoprènes de synthèse (IR), le caoutchouc naturel (NR), les copolymères de butadiène, les copolymères d'isoprène et leurs mélanges.

Les copolymères de butadiène sont préférentiellement choisis dans le groupe constitué par les copolymères de butadiène-styrène (SBR). On notera que le SBR peut être préparé en émulsion (ESBR) ou en solution (SSBR). Qu'il s'agisse de ESBR ou de SSBR. Parmi les copolymères à base de styrène et de butadiène, en particulier SBR, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%. Avantageusement, le copolymère butadiène-styrène est un SBR préparé en solution et présente une teneur en styrène comprise entre 5% et 60%, de préférence de 6% à 30%, en poids par rapport au poids total du copolymère, et une teneur (% molaire) en liaisons -1,2 de la partie butadiénique comprise entre 4% et 75%, de préférence entre 15% et 30%.

Préférentiellement, l'élastomère diénique est choisi dans le groupe constitué par les polybutadiènes, les polyisoprènes de synthèse, le caoutchouc naturel, les copolymères de butadiène-styrène et leurs mélanges. De préférence l'élastomère diénique est choisi dans le groupe constitué par les polyisoprènes de synthèse, le caoutchouc naturel et leurs mélanges. Alternativement, de manière tout aussi préférentielle, l'élastomère diénique est choisi dans le groupe constitué par les copolymères de butadiène-styrène et leurs mélanges.

### II-2 Polysulfure organique

La composition du pneumatique selon l'invention a pour caractéristique essentielle de comprendre entre 0,1 et 1 pce d'au moins un polysulfure organique.

La présence de polysulfure organique permet la vulcanisation partielle de la composition de caoutchouc à basse température, par exemple préalablement à la conformation du pneumatique dans un moule de cuisson. Ainsi, ce polysulfure organique permet de figer plus rapidement le mélange et de donc limiter les mouvements de gomme lors du moulage. Ainsi, lors de la conformation du pneumatique, cela permet de réduire les modifications d'architecture du pneumatique entre l'état cru et l'état cuit.

Par « polysulfure organique », on entend un composé organique comprenant au moins l'enchainement -Sn- avec n≥2. Par organique, on entend que le composé comprend au moins un atome C, H, O ou N.

La famille des polysulfures organiques comprend des polysulfures organiques non polymériques de formule R₁-Sn-R₂ dans laquelle n≥2 est le nombre d'atomes de soufre et R₁, R₂ représente indépendamment l'un de l'autre un groupe alkyle, aryle, arylalkyle, alkylaryle ou cycloalkyle, éventuellement substitué et de préférence un groupe aryle, éventuellement substitué. De préférence, R₁, R₂ sont identiques.

La famille des polysulfures organiques comprend également des polysulfures organiques polymériques de formule -[R-Sₙ]ₘ- dans laquelle n≥2 est le nombre d'atomes de soufre par motif, m>0 est le nombre de motifs de répétition et R représente un groupe alkyle, aryle, arylalkyle, alkylaryle ou cycloalkyle, éventuellement substitué et de préférence un groupe aryle, éventuellement substitué.

**Selon l'invention** le polysulfure organique est non-silicié, c'est-à-dire qu'il ne comporte pas d'atome de silicium.

**Selon l'invention** le polysulfure organique est un polysulfure aromatique répondant à la formule générale (I) suivante : 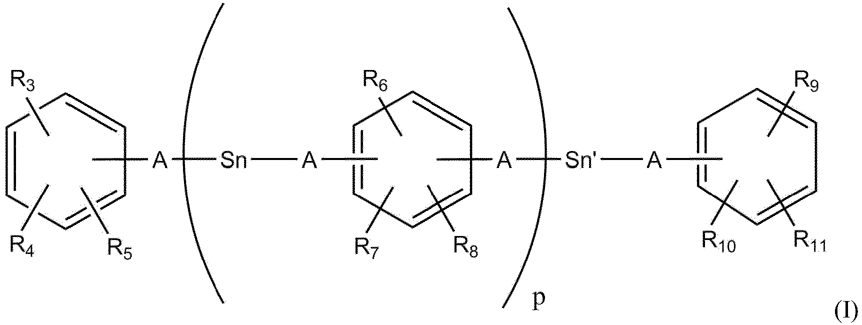 dans laquelle,
- R₃ à R₁₁, identiques ou différents, représentent un atome d'hydrogène, un radical -OH ou-O-M+, ou une chaine carbonée saturée ou insaturée comportant de 1 à 20 atomes de carbone, ou un groupe -OR₁₂, avec R₁₂ pouvant être un radical alkyle, arylalkyle, acyle, carboalkoxy, éther alkyle, silyle, silyle alkyles, comportant de 1 à 20 atomes de carbone,
- M représente un métal alcalin ou alcalino-terreux,
- n et n', identiques ou différents, représentent chacun un entier supérieur ou égal à 1 et inférieur ou égal à 8,
- p est un entier compris de 0 à 50, et
- A est un atome d'azote, une liaison simple, ou une chaine carbonée saturée ou insaturée de 1 à 20 atomes de carbone.

De préférence, dans la formule (I) :
- R₃, R₆ et R₉ sont des radicaux -OH,
- R₄, R₇ et R₁₀ sont des atomes d'hydrogène,
- R₅, R₈ et R₁₁ sont des chaines carbonées saturées ou insaturées comportant de 1 à 20 atomes de carbone, de préférence de 3 à 5 atomes de carbone,
- n et n' valent 2,
- p vaut de 1 à 10, de préférence de 3 à 8.

De manière préférentielle, le polysulfure organique est un polysulfure aromatique répondant à la formule générale (II) suivante : 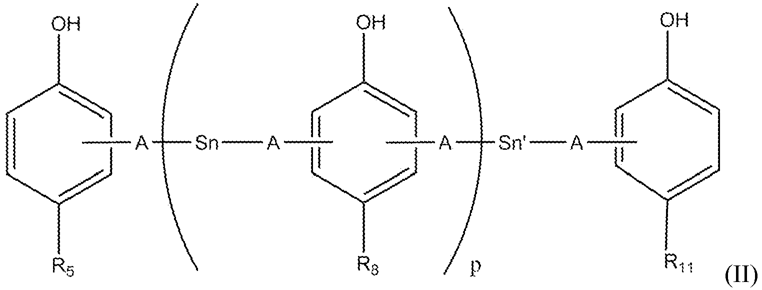 dans laquelle,
- R₅, R₈ et R₁₁, identiques ou différents, de préférence identiques, représentent une chaine carbonée saturée ou insaturée comportant de 1 à 20 atomes de carbone,
- n et n', identiques ou différents, représentent chacun un entier supérieur ou égal à 1 et inférieur ou égal à 8,
- p est un entier compris de 0 à 50, et
- A est un atome d'azote, une liaison simple, ou une chaine carbonée saturée ou insaturée de 1 à 20 atomes de carbone.

De préférence, dans la formule (II) :
- R₅, R₈ et R₁₁ sont des chaines carbonées saturées comportant de 1 à 20 atomes de carbone, de préférence de 3 à 5 atomes de carbone,
- n et n' valent 2,
- p vaut de 1 à 10, de préférence de 3 à 8.

De préférence, dans les composés de formule (I) et (II), R₅, R₈ et R₁₁, identiques ou différèrent, de préférence identiques, représentent un groupe tert-butyl ou tert-amyl, de préférence tert-butyl.

De préférence, le polysulfure organique est le para tert-butyl phénol disulfure.

Les polysulfures organiques sont bien connus de l'homme du métier et sont notamment décrits dans le document WO 2013/155038. A titre d'exemple de polysulfure organique disponibles dans le commerce, on peut citer notamment le Vultac TB7 de la société Arkema ou encore le GUS-M5 de la société M And B Greenus Co., Ltd.

Avantageusement, le taux de l'au moins un polysulfure organique, dans la composition du pneumatique selon l'invention, est compris dans un domaine allant de **0,10 à 0,90 pce, de préférence de 0,10 à 0,70 pce, de préférence encore de 0,15 à 0,50 pce**

De préférence, le taux total de polysulfure organique, dans la composition du pneumatique selon l'invention, est compris dans un domaine allant de 0,1 à 1 pce. En dessous de 0,1 pce, la quantité de polysulfure organique n'est plus suffisante pour amorcer une vulcanisation partielle de la composition de caoutchouc à basse température (avant cuisson). Au-delà de 1 pce, la composition de caoutchouc réticule trop rapidement avant la cuisson du pneumatique ce qui impacte négativement la processabilité. De préférence, le taux total de polysulfure organique, dans la composition du pneumatique selon l'invention, est compris dans un domaine allant de 0,15 à 0,5 pce.

### II-3 Système de réticulation

Selon l'invention, la composition du pneumatique comprend un système de vulcanisation.

Ce système de vulcanisation est à base de soufre (soufre moléculaire et/ou d'au moins un agent donneur de soufre). Avantageusement, le système de vulcanisation comprend du soufre moléculaire. En outre, il ne comprend avantageusement pas de donneur de soufre différent de l'au moins un polysulfure organique.

Le taux de soufre, de préférence de soufre moléculaire, dans la composition du pneumatique selon l'invention est préférentiellement compris dans un domaine allant de 0,2 à 10 pce, de préférence de 0,2 à 5 pce, de préférence encore de 0,5 à 2 pce.

Le système de vulcanisation comprend avantageusement en outre un accélérateur de vulcanisation. De préférence, l'accélérateur de vulcanisation est choisi parmi le tétrabenzylthiuram disulfure (en abrégé "TBZTD") et la famille des sulfénamides constituée par le disulfure de 2-mercaptobenzothiazyle (en abrégé "MBTS"), le N-cyclohexyl-2-benzothiazyle sulfénamide (en abrégé "CBS"), le N,N-dicyclohexyl-2-benzothiazyle sulfénamide (en abrégé "DCBS"), le N-ter-butyl-2-benzothiazyle sulfénamide (en abrégé "TBBS"), le N-ter-butyl-2-benzothiazyle sulfénimide (en abrégé "TBSI") et les mélanges de ces composés. De manière particulièrement avantageuse, l'accélérateur de vulcanisation est le CBS.

Le système de vulcanisation peut également comprendre d'autres accélérateurs et activateurs de vulcanisation tels que l'oxyde de zinc, l'acide stéarique, un dérivé guanidique, (par exemple la diphénylguanidine). Le système de vulcanisation comprend également un retardateur de vulcanisation tel que le N-(Cyclohexylthio)phthalimide (en abrégé "CTP").

L'ensemble des accélérateurs, retardateurs et activateurs de vulcanisation est utilisé à un taux préférentiel compris entre 0,5 et 15 pce. L'accélérateur de vulcanisation est utilisé à un taux préférentiel compris entre 0,5 et 10 pce, plus préférentiellement compris entre 0,5 et 5 pce.

### II-4 Charge renforçante

La composition du pneumatique selon l'invention peut comprendre en outre une charge renforçante, connue pour ses capacités à renforcer une composition de caoutchouc.

La charge renforçante peut comprendre du noir de carbone, de la charge inorganique renforçante ou un de leurs mélanges. Avantageusement, la charge renforçante comprend majoritairement, de préférence exclusivement, du noir de carbone.

Le taux de charge renforçante, de préférence de noir de carbone, dans la composition est de préférence compris dans un domaine allant de 1 à 200 pce, de préférence de 5 à 80 pce, de préférence encore de 30 à 70 pce.

Les noirs utilisables dans le cadre de la présente invention peuvent être tout noir conventionnellement utilisé dans le domaine des pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600).

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice (SiO2) ou du type alumineux, en particulier l'alumine (Al2O3). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g. De préférence, la silice présente une surface spécifique BET inférieure à 200 m²/g et/ou une surface spécifique CTAB est inférieure à 220 m²/g, de préférence une surface spécifique BET comprise dans un domaine allant de 125 à 200 m²/g et/ou une surface spécifique CTAB comprise dans un domaine allant de 140 à 170 m²/g.

La surface spécifique BET de la silice est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

A titre de silices utilisables dans le cadre de la présente invention, on citera par exemple les silices précipitées hautement dispersibles (dites « HDS » pour « highly dispersible » ou « highly dispersible silica »). Ces silices, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack^{®} » de la série CRX2000 » ou de la série « CRX4000 » de la société Cabot Corporation.

Lorsqu'une charge inorganique (par exemple de la silice) est utilisée dans la composition, seule ou en coupage avec du noir de carbone, son taux est compris dans un domaine de 0 à 70 pce (préférentiellement de 0 à 50 pce), en particulier également de 5 à 70 pce, et encore plus préférentiellement cette proportion varie de 5 à 60 pce, particulièrement de 30 à 60 pce.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, ledit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

Bien entendu pourraient être également utilisés des mélanges des agents de couplage précédemment décrits.

La teneur en agent de couplage dans la composition de l'invention représente avantageusement de 0,5% à 15% en poids par rapport à la quantité de charge inorganique renforçante. Lorsqu'une charge inorganique renforçante est présente, son taux est préférentiellement compris dans un domaine allant de 0,5 à 10 pce, plus préférentiellement compris dans un domaine allant de 1 à 5 pce. Ce taux est aisément ajusté par l'homme du métier selon le taux de charge inorganique renforçante utilisé dans la composition de l'invention.

### II-5 Additifs possibles

Les compositions de caoutchouc du pneumatique selon l'invention peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

La composition peut notamment comprendre une résine plastifiante hydrocarbonée. La résine plastifiante hydrocarbonée est choisie dans le groupe constitué par les résines d'homopolymères ou copolymères de cyclopentadiène ou dicyclopentadiène, les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et leurs mélanges. Avantageusement, la résine plastifiante est une résine dicyclopentadiène aromatique, comprenant de préférence majoritairement des motifs styrène, éthylène et dicyclopentadiène.

Avantageusement, le taux de résine plastifiante hydrocarbonée dans la composition du pneumatique selon l'invention est compris dans un domaine allant de 2 à 40 pce, de préférence de 2 à 20 pce. De telles résines sont décrites par exemple paragraphe I-4-1 de la demande WO 2016/202968.

Par ailleurs, la composition du pneumatique selon l'invention ne comprend avantageusement pas d'huile plastifiante ou en comprend moins de 5 pce. A titre d'exemple d'huile plastifiante, on peut citer les plastifiants liquides mentionnés au paragraphe I-4-2 de la demande WO 2016/202968.

### II-6 Préparation des compositions de caoutchouc

La composition du pneumatique selon l'invention peut être fabriquée dans des mélangeurs appropriés, en utilisant deux phases de préparation successives bien connues de l'homme du métier :
une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudé avec une autre composition de caoutchouc) sous la forme d'un semi-fini (ou profilé) de caoutchouc utilisable par exemple comme bande de roulement de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, sous pression.

### II-7 Pneumatique

Selon l'invention le pneumatique est pourvu d'une bande de roulement présentant un taux moyen de creux volumique sur l'ensemble de la bande de roulement supérieur à 10 %.

Le taux de creux volumique de la bande de roulement peut être obtenu notamment en comparant le volume occupé par les barrettes ou blocs d'une bande de roulement (ci-après dénommé « vol barrette ») avec le volume d'une bande de roulement qui ne diffère de la précédente bande de roulement qu'en ce qu'elle ne comprend pas de rainure (le volume occupé par les rainures est comblé de gommes). Le taux de creux volumique (tx vol) peut ainsi être obtenu en appliquant la formule suivante : tx vol = 1 - (vol barrette / vol lisse).

De préférence, la bande de roulement du pneumatique présente un taux moyen de creux volumique sur l'ensemble de la bande de roulement supérieur à 15%, de préférence compris entre 15 et 80 %, de préférence entre 30 et 75 %.

Avantageusement, la bande de roulement du pneumatique présente une hauteur moyenne de bloc supérieure à 20 mm, de préférence comprise entre 25 et 130 mm de préférence entre 65 et 120 mm.

La hauteur moyenne des blocs peut être mesurée simplement à l'aide d'une règle ou d'une jauge de profondeur. On mesure particulièrement la distance entre la surface de la bande de roulement destinée à venir en contact avec le sol lors du roulage et la surface du fond de la rainure adjacente la plus profonde.

La composition du pneumatique selon l'invention peut être présente dans n'importe quel poste du pneumatique. De préférence, la composition du pneumatique selon l'invention est présente dans au moins un poste du pneumatique choisi dans le groupe constitué par la bande de roulement, la sous-couche de la bande de roulement et les nappes sommets. De préférence, elle est présente dans la bande de roulement du pneumatique.

Avantageusement, le pneumatique selon l'invention est un pneumatique pour véhicule de génie civil ou pour véhicule agricole.

### III- EXEMPLES

### III-1 Mesures et tests utilisés

### Plasticité Mooney (avant cuisson)

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM= 0,83 Newton.mètre).

On rappelle que, de manière bien connue de l'homme du métier, plus la plasticité Mooney est faible, plus le matériau est facile à travailler. Bien entendu, en-deçà d'une certaine valeur (e.g., 20 UM), le matériau devient trop liquide pour être utilisable industriellement.

### Rhéométrie (durant cuisson)

Les mesures sont effectuées à 150°C avec un rhéomètre à chambre oscillante, selon la norme DIN 53529 - partie 3 (juin 1983). L'évolution du couple rhéométrique, ΔCouple, en fonction du temps décrit l'évolution de la rigidification de la composition par suite de la réaction de vulcanisation. Les mesures sont traitées selon la norme DIN 53529 - partie 2 (mars 1983) : T0 est le délai d'induction (exprimé en min), c'est-à-dire le temps nécessaire au début de la réaction de vulcanisation ; Tα (par exemple T90) est le temps nécessaire pour atteindre une conversion de α%, c'est-à-dire α% (par exemple 90%) de l'écart entre les couples minimum et maximum. Plus la valeur de tα est faible, plus la composition aura réticulé rapidement, c'est-à-dire que la cuisson aura été rapide.

### Propriétés dynamiques (après cuisson)

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 10% et 100% d'allongement notés respectivement M10 et M100.

Les résultats de rigidité M10 et M100 sont présentés en « base 100 » par rapport à la composition Témoin A. Plus la valeur est élevée, plus la composition est rigide à faible et forte déformation respectivement.

Toutes ces mesures de traction sont effectuées dans les conditions normales de température (23±2°C) et d'hygrométrie (50±5% d'humidité relative), selon la norme française NF T 40-101 (décembre 1979).

Les propriétés dynamiques G*(10%) et tan(δ)max à 60°C sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10Hz, dans les conditions définies de température par exemple à 60°C selon la norme ASTM D 1349-99, ou selon les cas à une température différente. On effectue un balayage en amplitude de déformation de 0,1 à 50% (cycle aller), puis de 50% à 0,1% (cycle retour). Les résultats exploités sont le module complexe de cisaillement dynamique G* et le facteur de perte tan(δ). Pour le cycle retour, on indique la valeur maximale de tan(δ) observée, noté tan(δ)max, ainsi que le module complexe de cisaillement dynamique G*(10%) à 10% de déformation, à 60°C. On rappelle que, de manière bien connue de l'homme du métier, la valeur de tan(δ)max à 60°C est représentative de l'hystérèse du matériau donc de la résistance au roulement : plus tan(δ)max à 60°C est faible, plus la résistance au roulement est réduite et donc améliorée.

### III-2 Préparation des compositions

Dans les exemples qui suivent, les compositions caoutchouteuses ont été réalisées comme décrit au point II.6 ci-dessus. En particulier, la phase « non-productive » a été réalisée dans un mélangeur de 0,4 litres pendant 3,5 minutes, pour une vitesse moyenne de palettes de 50 tours par minutes jusqu'à atteindre une température maximale de tombée de 160°C. La phase « productive » a été réalisée dans un outil à cylindre à 23°C pendant 5 minutes. La composition a été calandrée par exemple sous la forme d'une plaque pour une caractérisation au laboratoire avant et après cuisson.

La réticulation de la composition a été conduite à une température comprise entre 130°C et 200°C, sous pression.

### III-3 Essais de compositions de caoutchouc

Les exemples présentés ci-dessous ont pour objet de comparer la vitesse de cuisson de deux compositions conformes à l'invention (C1 à C2) avec deux compositions témoin (T1 et T2).

Les formulations testées contiennent toutes : 70 pce d'un SBR solution couplé étain avec % Styrène 26,5, % Vinyl 35, % Trans 48 (Tg -65°C) ; 30 pce SBR solution étoilé 3-tris-ditertiobutyphényl phosphite avec 41% de motif styrène et 24% de motif 1,2 de la partie butadiénique (Tg -25°C) ; 47 pce de noir de carbone Grade ASTM N234 de la société Cabot ; 10 pce de résine DCPD/Aromatique « Novares TC160 » de la société Rütgers Mn=710g/mol ; Mw=2000g/mol ; Ip=2,8, Tg=106°C. Protons Aromatiques : 13%, Protons éthyléniques : 5,6%, Protons Aliphatiques : 81,4% ; 1,5 pce de résine tackifiante (« Escorez 1102 » de société EXXON (Mn 1370 g/mol ; Ip= 2,3) ; 3 pce de N-1,3-diméthylbutyl-N-phénylparaphénylènediamine (Santoflex 6-PPD de la société Flexsys) ; 2 pce de cire anti-ozone « VARAZON 4959 » de la société Sasol Wax ; 1,2 pce de soufre ; 1,8 pce de N-cyclohexyl-2-benzothiazyle sulfénamide « Santocure CBS » de la société Flexsys ; 1 pce d'acide stéarique « Pristerene 4931 » de la société Uniqema ; 1,5 pce d'oxyde de zinc (grade industriel - société Umicore) ; et 0,1 pce de N-cyclohexylthiophtalimide commercialisé sous dénomination (« CTP ») « Vulkalent G » de la société Lanxess.

Les compositions T1, T2, C1 et C2 diffèrent par la teneur en disulfide de poly-tert-butylphénol (APDS) (« Vultac TB7 » de la société Arkema), qui est respectivement de 0 ; 0,05 ; 0,15 et 0,30 pce.

Les résultats obtenus sont présentés dans le Tableau 1 ci-dessous.

**Tableau 1**

| Résultats | T1 | T2 | C1 | C2 |
|---|---|---|---|---|
| T90 | 15,30 | 15,24 | 14,04 | 13,73 |
| MA10 | 100 | 99 | 111 | 110 |
| MA100 | 100 | 100 | 111 | 108 |

Ces résultats montrent que la composition du pneumatique conforme à l'invention réticule plus rapidement que les compositions témoins ne comprenant pas de polysulfure organique. Cela est particulièrement avantageux pour les pneumatiques de grande dimension pour limiter les modifications d'architecture des différentes nappes d'un pneumatique avant et après cuisson.

Par ailleurs, ces résultats montrent également que les compositions conformes à l'invention présentent des rigidités à faible et forte déformation plus importantes. En outre, il a été constaté que le Mooney des compositions conformes à l'invention à cru et l'hystérèse des compositions conformes à l'invention après cuisson n'étaient pas ou peu affectés.

## Revendications

1. Pneumatique pourvu d'une bande de roulement dont le taux moyen de creux volumique sur l'ensemble de la bande de roulement est supérieur à 10 %, ledit pneumatique comprenant une composition à base d'au moins un élastomère diénique, d'un système de vulcanisation et de 0,10 à 1 pce d'au moins un polysulfure organique,
dans lequel le polysulfure organique est un polysulfure aromatique répondant à la formule générale (I) suivante : 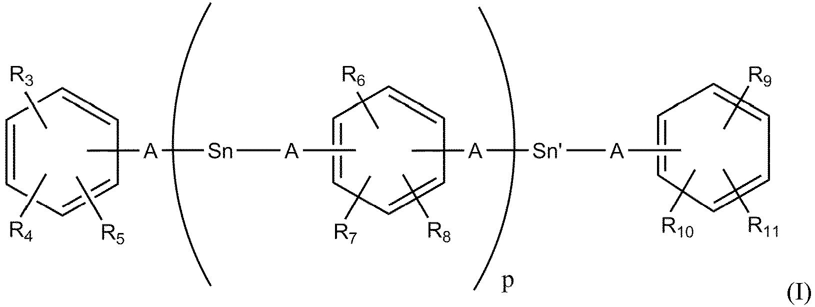 dans laquelle,
- R₃ à R₁₁, identiques ou différents, représentent un atome d'hydrogène, un radical -OH ou-O-M+, ou une chaine carbonée saturée ou insaturée comportant de 1 à 20 atomes de carbone, ou un groupe -OR₁₂, avec R₁₂ pouvant être un radical alkyle, arylalkyle, acyle, carboalkoxy, éther alkyle, silyle, silyle alkyles, comportant de 1 à 20 atomes de carbone,
- M représente un métal alcalin ou alcalino-terreux,
- n et n', identiques ou différents, représentent chacun un entier supérieur ou égal à 1 et inférieur ou égal à 8,
- p est un entier compris de 0 à 50,
- et A est un atome d'azote, une liaison simple, ou une chaine carbonée saturée ou insaturée de 1 à 20 atomes de carbone.

2. Pneumatique selon la revendication 1, dans lequel dans la formule (I) :
- R₃, R₆ et R₉ sont des radicaux -OH,
- R₄, R₇ et R₁₀ sont des atomes d'hydrogène,
- R₅, R₈ et R₁₁ sont des chaines carbonées saturées ou insaturées comportant de 1 à 20 atomes de carbone, de préférence de 3 à 5 atomes de carbone,
- n et n' valent 2,
- p vaut de 1 à 10, de préférence de 3 à 8.

3. Pneumatique selon la revendication 1 ou 2, dans lequel le polysulfure organique est un polysulfure aromatique répondant à la formule générale (II) suivante : 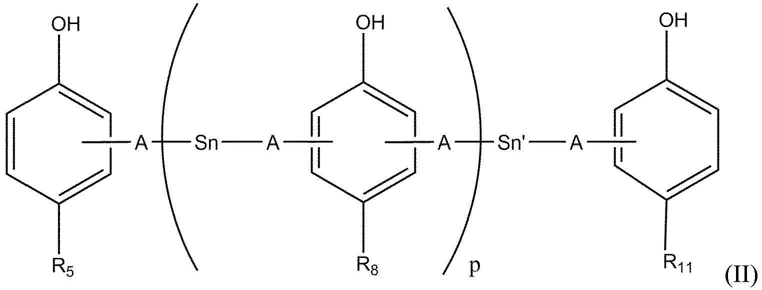 dans laquelle,
- R₅, R₈ et R₁₁, identiques ou différents, de préférence identiques, représentent une chaine carbonée saturée ou insaturée comportant de 1 à 20 atomes de carbone,
- n et n', identiques ou différents, représentent chacun un entier supérieur ou égal à 1 et inférieur ou égal à 8,
- p est un entier compris de 0 à 50,
- et A est un atome d'azote, une liaison simple, ou une chaine carbonée saturée ou insaturée de 1 à 20 atomes de carbone.

4. Pneumatique selon l'une quelconque des revendications 1 à 3, dans lequel, dans les composés de formule (I) et (II), R₅, R₈ et R₁₁, identiques ou différents, de préférence identiques, représentent un groupe tert-butyl ou tert-amyl, de préférence tert-butyl.

5. Pneumatique selon l'une quelconque des revendications précédentes, dans lequel le taux de l'au moins un polysulfure organique, dans la composition, est compris dans un domaine allant de 0,10 à 0,90 pce, de préférence de 0,10 à 0,70 pce, de préférence encore de 0,15 à 0,50 pce.

6. Pneumatique selon l'une quelconque des revendications précédentes, dans lequel l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères.

7. Pneumatique selon l'une quelconque des revendications précédentes, dans lequel le système de vulcanisation comprend du soufre moléculaire et/ou au moins un agent donneur de soufre différent de l'au moins un polysulfure organique.

8. Pneumatique selon l'une quelconque des revendications précédentes, dans lequel la composition comprend en outre une charge renforçante comprenant du noir de carbone, de la charge renforçante inorganique ou un de leurs mélanges.

9. Pneumatique selon la revendication 8, dans lequel le taux de charge renforçante dans la composition est compris dans un domaine allant de 1 à 200 pce, de préférence de 5 à 80 pce, de préférence de 30 à 70 pce.

10. Pneumatique selon l'une quelconque des revendications précédentes, dont la bande de roulement présente une hauteur moyenne de bloc supérieure à 20 mm, de préférence comprise entre 25 et 130 mm, de préférence entre 65 et 120 mm.

11. Pneumatique selon l'une quelconque des revendications précédentes, dont la bande de roulement présente un taux moyen de creux volumique sur l'ensemble de la bande de roulement compris entre 15 et 80 %, de préférence entre 30 et 75 %.

12. Pneumatique selon l'une quelconque des revendications précédentes, dans lequel la composition est présente dans la bande de roulement du pneumatique.

13. Pneumatique selon l'une quelconque des revendications précédentes, ledit pneumatique étant un pneumatique pour véhicule de génie civil ou pour véhicule agricole.

## Patentansprüche

1. Reifen, der mit einem Laufstreifen versehen ist, dessen mittlerer volumenbezogener Hohlraumanteil mehr als 10 % beträgt, wobei der Reifen eine Zusammensetzung auf Basis mindestens eines Dienelastomers, eines Vulkanisationssystems und von 0,10 bis 1 phr mindestens eines organischen Polysulfids umfasst,
wobei das organische Polysulfid ein aromatisches Polysulfid ist, das der folgenden allgemeinen Formel (I) entspricht: 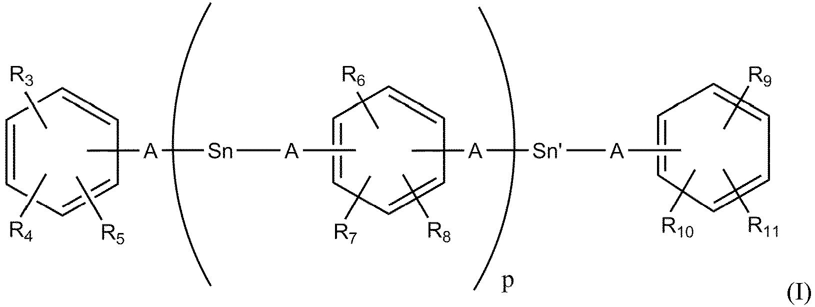
in der,
- R₃ bis R₁₁, gleich oder verschieden, für ein Wasserstoffatom, einen Rest -OH oder -O-M+ oder eine gesättigte oder ungesättigte Kohlenstoffkette mit 1 bis 20 Kohlenstoffatomen oder eine Gruppe -OR₁₂ stehen, wobei R₁₂ ein Alkyl-, Arylalkyl-, Acyl-, Carboalkoxy-, Etheralkyl-, Silyl-, Silylalkyl-Rest mit 1 bis 20 Kohlenstoffatomen sein kann,
- M für ein Alkali- oder Erdalkalimetall steht,
- n und n', gleich oder verschieden, jeweils für eine ganze Zahl größer oder gleich 1 und kleiner oder gleich 8 stehen,
- p eine ganze Zahl zwischen 0 und 50 ist,
- und A ein Stickstoffatom, eine Einfachbindung oder eine gesättigte oder ungesättigte Kohlenstoffkette mit 1 bis 20 Kohlenstoffatomen ist.

2. Reifen nach Anspruch 1, wobei in der Formel (I):
- R₃, R₆ und R₉ Reste -OH sind,
- R₄, R₇ und R₁₀ Wasserstoffatome sind,
- R₅, R₈ und R₁₁ gesättigte oder ungesättigte Kohlenstoffketten mit 1 bis 20 Kohlenstoffatomen, bevorzugt mit 3 bis 5 Kohlenstoffatomen, sind,
- n und n' den Wert 2 haben,
- p einen Wert von 1 bis 10, bevorzugt von 3 bis 8, hat.

3. Reifen nach Anspruch 1 oder 2, wobei das organische Polysulfid ein aromatisches Polysulfid ist, das der folgenden allgemeinen Formel (II) entspricht: 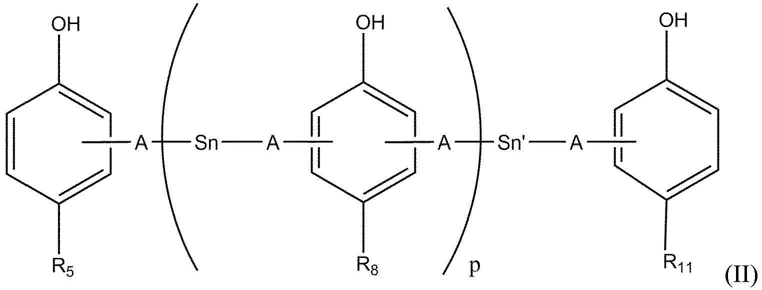 in der,
- R₅, R₈ und R₁₁, gleich oder verschieden, bevorzugt gleich, für eine gesättigte oder ungesättigte Kohlenstoffkette mit 1 bis 20 Kohlenstoffatomen stehen,
- n und n', gleich oder verschieden, jeweils für eine ganze Zahl größer oder gleich 1 und kleiner oder gleich 8 stehen,
- p eine ganze Zahl zwischen 0 und 50 ist,
- und A ein Stickstoffatom, eine Einfachbindung oder eine gesättigte oder ungesättigte Kohlenstoffkette mit 1 bis 20 Kohlenstoffatomen ist.

4. Reifen nach einem der Ansprüche 1 bis 3, wobei in den Verbindungen mit der Formel (I) und (II) R₅, R₈ und R₁₁, gleich oder verschieden, bevorzugt gleich, für eine tert-Butyl- oder tert-Amyl-, bevorzugt eine tert-Butyl-Gruppe, stehen.

5. Reifen nach einem der vorhergehenden Ansprüche, wobei der Gehalt des mindestens einen organischen Polysulfids in der Zusammensetzung in einem Bereich von 0,10 bis 0,90 phr, bevorzugt von 0,10 bis 0,70 phr, noch bevorzugter von 0,15 bis 0,50 phr liegt.

6. Reifen nach einem der vorhergehenden Ansprüche, wobei das Dienelastomer ausgewählt ist aus der Gruppe bestehend aus den Polybutadienen, den synthetischen Polyisoprenen, dem Naturkautschuk, den Butadien-Copolymeren, den Isopren-Copolymeren und den Mischungen dieser Elastomere.

7. Reifen nach einem der vorhergehenden Ansprüche, wobei das Vulkanisationssystem molekularen Schwefel und/oder mindestens einen Schwefeldonor, der verschieden von dem mindestens einen organischen Polysulfid ist, umfasst.

8. Reifen nach einem der vorhergehenden Ansprüche, wobei die Zusammensetzung ferner einen verstärkenden Füllstoff umfasst, der Ruß, anorganischen verstärkenden Füllstoff oder eine ihrer Mischungen umfasst.

9. Reifen nach Anspruch 8, wobei der Gehalt des verstärkenden Füllstoffs in der Zusammensetzung in einem Bereich von 1 bis 200 phr, bevorzugt von 5 bis 80 phr, bevorzugt von 30 bis 70 phr liegt.

10. Reifen nach einem der vorhergehenden Ansprüche, wobei der Laufstreifen eine mittlere Blockhöhe aufweist, die mehr als 20 mm, bevorzugt zwischen 25 und 130 mm, bevorzugt zwischen 65 und 120 mm beträgt.

11. Reifen nach einem der vorhergehenden Ansprüche, wobei der Laufstreifen eine mittleren volumenbezogenen Hohlraumanteil über den gesamten Laufstreifen zwischen 15 und 80 %, bevorzugt zwischen 30 und 75 % aufweist.

12. Reifen nach einem der vorhergehenden Ansprüche, wobei die Zusammensetzung in dem Laufstreifen des Reifen vorhanden ist.

13. Reifen nach einem der vorhergehenden Ansprüche, wobei der Reifen ein Reifen für ein Erdbewegungsfahrzeug oder für ein landwirtschaftliches Fahrzeug ist.

## Claims

1. Tyre provided with a tread, of which the mean volumetric void ratio over the entire tread is greater than 10%, said tyre comprising a composition based on at least one diene elastomer, on a vulcanization system and from 0.10 to 1 phr of at least one organic polysulfide, wherein the organic polysulfide is an aromatic polysulfide corresponding to the following general formula (I): 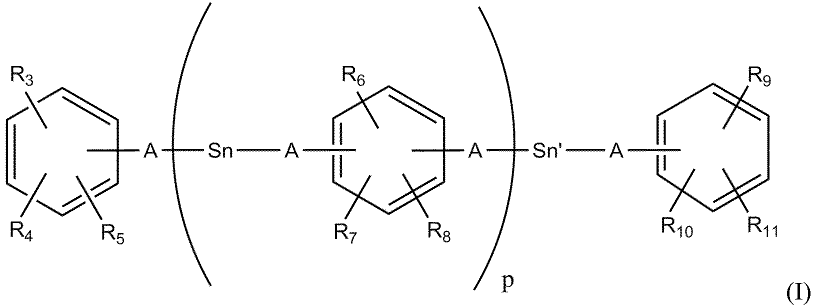 in which:
- R₃ to R₁₁, which may be identical or different, represent a hydrogen atom, an -OH or - O⁻M⁺ radical, or a saturated or unsaturated carbon-based chain containing from 1 to 20 carbon atoms, or a group -OR₁₂, with R₁₂ possibly being an alkyl, arylalkyl, acyl, carboalkoxy, alkyl ether, silyl, alkylsilyl radical, comprising from 1 to 20 carbon atoms,
- M represents an alkali or alkaline-earth metal,
- n and n', which may be identical or different, each represent an integer greater than or equal to 1 and less than or equal to 8,
- p is an integer between from 0 to 50,
- and A is a nitrogen atom, a single bond, or a saturated or unsaturated carbon-based chain of 1 to 20 carbon atoms.

2. Tyre according to Claim 1, wherein, in the formula (I):
- R₃, R₆ and R₉ are -OH radicals,
- R₄, R₇ and R₁₀ are hydrogen atoms,
- R₅, R₈ and R₁₁ are saturated or unsaturated carbon-based chains containing from 1 to 20 carbon atoms, preferably from 3 to 5 carbon atoms,
- n and n' are 2,
- p is from 1 to 10, preferably from 3 to 8.

3. Tyre according to Claims 1 or 2, wherein the organic polysulfide is an aromatic polysulfide corresponding to the following general formula (II): 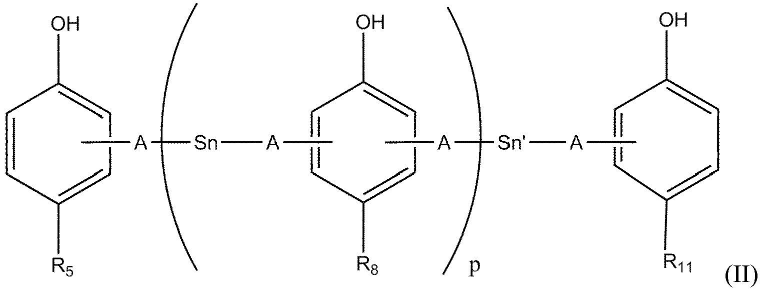 in which:
- R₅, R₈ and R₁₁, which may be identical or different, preferably identical, represent a saturated or unsaturated carbon-based chain containing from 1 to 20 carbon atoms,
- n and n', which may be identical or different, each represent an integer greater than or equal to 1 and less than or equal to 8,
- p is an integer between from 0 to 50,
- and A is a nitrogen atom, a single bond, or a saturated or unsaturated carbon-based chain of 1 to 20 carbon atoms.

4. Tyre according to any one of Claims 1 to 3, wherein, in the compounds of formula (I) and (II), R₅, R₈ and R₁₁, which may be identical or different, preferably identical, represent a tert-butyl or tert-amyl, preferably a tert-butyl, group.

5. Tyre according to any one of the preceding claims, wherein the content of the at least one organic polysulfide, in the composition is within a range extending from 0.10 to 0.90 phr, preferably from 0.10 to 0.70 phr, more preferably from 0.15 to 0.50 phr.

6. Tyre according to any one of the preceding claims, wherein the diene elastomer is selected from the group consisting of polybutadienes, synthetic polyisoprenes, natural rubber, butadiene copolymers, isoprene copolymers and the mixtures of these elastomers.

7. Tyre according to any one of the preceding claims, wherein the vulcanization system comprises molecular sulfur and/or at least one sulfur-donating agent other than the at least one organic polysulfide.

8. Tyre according to any one of the preceding claims, wherein the composition further comprises a reinforcing filler comprising carbon black, reinforcing inorganic filler or a mixture thereof.

9. Tyre according to Claim 8, wherein the content of reinforcing filler in the composition is within a range extending from 1 to 200 phr, preferably from 5 to 80 phr, and preferably from 30 to 70 phr.

10. Tyre according to any one of the preceding claims, the tread of which has a mean tread block height of greater than 20 mm, preferably between 25 and 130 mm, preferably between 65 and 120 mm.

11. Tyre according to any one of the preceding claims, the tread of which has a mean volumetric void ratio over the entire tread of between 15% and 80%, preferably between 30% and 75%.

12. Tyre according to any one of the preceding claims, wherein the composition is present in the tread of the tyre.

13. Tyre according to any one of the preceding claims, said tyre being a tyre for a construction plant vehicle or for an agricultural vehicle.
